# EUROPÄISCHE PATENTSCHRIFT

(11) **EP 4 096 983 B1**
(45) Veröffentlichungstag und Bekanntmachung des Hinweises auf die Patenterteilung: **14.02.2024**
(21) Anmeldenummer: 21711770.4
(22) Anmeldetag: 03.03.2021
(51) Int. Cl.: B61C 15/10, B60B 39/02, B61K 9/08

(54) **VERFAHREN ZUR ANSTEUERUNG EINER GLEISKONDITIONIEREINHEIT BZW. EINER SPURKRANZSCHMIERANLAGE**
METHOD FOR ACTUATING A TRACK CONDITIONING UNIT OR A WHEEL FLANGE LUBRICATING SYSTEM
PROCÉDÉ D'ACTIONNEMENT D'UNE UNITÉ DE CONDITIONNEMENT DE VOIE OU D'UN SYSTÈME DE LUBRIFICATION DE FLASQUE DE ROUE

(30) Priorität: 12.03.2020 DE 102020203188
(43) Veröffentlichungstag der Anmeldung: 07.12.2022
(73) Patentinhaber: Siemens Mobility GmbH, 81739 München (DE)
(72) Erfinder: FEGE, Alexander, 86157 Augsburg (DE); MEYER, Heiko, 80339 München (DE); ROSSIG, Kilian, 81247 München (DE); USINGER, Stefan, 85221 Dachau (DE)
(74) Vertreter: Siemens Patent Attorneys
(86) Internationale Anmeldenummer: PCT/EP2021/055241
(87) Internationale Veröffentlichungsnummer: WO 2021/180523

(56) Entgegenhaltungen:
- EP-A1- 0 642 966
- EP-A1- 0 854 072
- WO-A1-2017/070677
- WO-A1-2019/219223
- US-A1- 2018 119 376

## Beschreibung

Die Erfindung betrifft ein Verfahren zur Ansteuerung einer Gleiskonditioniereinheit bzw. einer Spurkranzschmieranlage eines Schienenfahrzeugs.

Es ist bekannt, zur Verbesserung der Zugkraft bzw. der Bremskraft eines Schienenfahrzeugs Maßnahmen an den Schienen zu ergreifen. Zu diesem Zweck wird eine Gleiskonditionierung eingesetzt, wie sie beispielsweise aus Dokument WO 2019 219223 A1 bekannt ist. Die Gleiskonditioniereinheit wird dazu verwendet, um Hilfsmedien (Sand, Luft) mit hoher Genauigkeit auf die befahrenen Schienen aufzubringen, um einen Kraftschluss zwischen Rad und Schiene und damit Zug- und Bremskraft des Schienenfahrzeugs bei Bedarf zu erhöhen.

Weiter ist es bekannt, eine Spurkranzschmieranlage eines Schienenfahrzeugs zu benutzen, um bei einer verschleißfördernden, ungünstigen Radsatz- bzw. Einzelrad-Stellung zur Schiene einen durch die Stellung bedingten Materialverschleiß sowie Geräuschemissionen durch Aufbringen eines Fluids (z.B. eines Schmiermittels oder Öl) zu reduzieren. Das Fluid wird auf einen Radteilbereich, beispielsweise auf eine Radlauffläche, oder in der Nähe des Rads auf einen Schienenteilbereich aufgebracht.

Dokument EP 0854072 A1 beschreibt eine Ausgestaltung einer Spurkranzschmierung.

Um die Gleiskonditioniereinheit bzw. um die Spurkranzschmieranlage optimiert einsetzen zu können, ist es nötig, diese im Betrieb durch eine Ansteuerung an den realen Schienenverlauf anzupassen. Dadurch wird ermöglicht, dass Hilfsmittel bzw.

Fluid zielgerichtet und Ressourcen-schonend auf Schiene bzw. Rad aufgebracht werden.

Es ist die Aufgabe der vorliegenden Erfindung ein Verfahren zur Ansteuerung einer Gleiskonditioniereinheit bzw. einer Spurkranzschmieranlage anzugeben, mit dem beim Einsatz einer Gleiskonditioniereinheit bzw. einer Spurkranzschmieranlage ein zielgerichtetes und Ressourcen-schonendes Aufbringen von Hilfsmitteln bzw. von Fluid auf Rad bzw. Schiene ermöglicht wird.

Diese Aufgabe wird durch die Merkmale des Anspruchs 1 gelöst. Vorteilhafte Weiterbildungen sind in den abhängigen Ansprüchen angegeben.

Die Erfindung betrifft ein Verfahren zur Ansteuerung einer Gleiskonditioniereinheit bzw. einer Spurkranzschmieranlage eines Schienenfahrzeugs.

Die Gleiskonditioniereinheit bringt als Teil des Schienenfahrzeugs bei Bedarf ein Hilfsmittel auf Teilbereiche einer vom Schienenfahrzeug befahrenen Schiene aus, um Reibung zwischen Rad und Schiene zu erhöhen.

Die Spurkranzschmieranlage bringt als Teil des Schienenfahrzeugs bei Bedarf ein Fluid auf einen Radteilbereich (beispielsweise auf eine Radlauffläche) oder in der Nähe des Rads auf einen Schienenteilbereich auf. Das Fluid wird bevorzugt in Spurkranznähe aufgebracht. Durch das Fluid wird Reibung zwischen Rad und Schiene reduziert.

Eine Relativbewegung zwischen Wagenkasten und Fahrwerk des Schienenfahrzeugs wird mit Hilfe einer Wegmessung kontinuierlich erfasst, um einen Bogen im Schienenverlauf zu detektieren.Basierend auf der Wegmessung wird die Gleiskonditioniereinheit bzw. die Spurkranzschmieranlage abhängig vom Bogen gezielt angesteuert, so dass das Hilfsmittel (insbesondere Luft bzw. Sand) bzw. so dass das Fluid ressourcenschonend und wirkungsoptimiert aufgebracht wird.

Bevorzugt wird das Hilfsmittel auf einen Schienenteilbereich aufgebracht, während das Fluid auf einen Radteilbereich aufgebracht wird.

Das Fluid wird auf einen Radteilbereich, beispielsweise auf eine Radlauffläche oder in Spurkranznähe, aufgebracht. Das Fluid kann ggf. auch Rad-nah auf einen Schienenteilbereich aufgebracht werden, um den zu befahrenden Schienenteilbereich vor Kontakt mit dem Rad zu schmieren.

Die vorliegende Erfindung basiert darauf, dass beim Befahren von Bögen durch ein Schienenfahrzeug eine Relativbewegung zwischen Wagenkasten und Fahrwerk erfolgt. Diese Relativbewegung wird erfasst und ausgewertet, um den Bogen im Schienenverlauf zu detektieren, ihn zu bewerten und um nachfolgend die Gleiskonditioniereinheit bzw. die Spurkranzschmieranlage in Abhängigkeit des Bogens gezielt anzusteuern.

Damit wird das Hilfsmittel bzw. Fluid in Abhängigkeit des Bogens gezielt dosiert bzw. eingesetzt.

Die Relativbewegung zwischen Wagenkasten und Fahrwerk wird bei der vorliegenden Erfindung durch eine Wegmessung mit Hilfe einer Sensorik bestimmt.

Die Wegmessung über die Sensorik erfolgt beispielsweise nach optischen, induktiven, ultraschallbasierten oder kapazitiven Messprinzipien, die derart ausgebildet und angeordnet sind, dass über die Wegmessung die Relativbewegung zwischen Wagenkasten und Fahrwerk bestimmbar ist.

Erfindungsgemäß wird die Relativbewegung durch eine Wegmessung an Dämpfern bestimmt. Die Dämpfer sind zwischen Wagenkasten und Fahrwerk für vorbestimmte Raumrichtungen vorgesehen und angebracht, um die Relativbewegung zu dämpfen.

In einer bevorzugten Weiterbildung beinhalten die Dämpfer die Sensorik, die die Dämpferwege ermittelt. Basierend auf den Dämpferwegen werden, wie oben ausgeführt, Bögen im Schienenverlauf detektiert und bewertet, um nachfolgend die Gleiskonditioniereinheit bzw. einer Spurkranzschmieranlage in Abhängigkeit des Bogens gezielt anzusteuern.

Durch das erfindungsgemäße Verfahren wird ein System zur Wegmessung, das bevorzugt sechs Freiheitsgrade zwischen Wagenkasten und Fahrwerk überwacht, dazu verwendet, die Gleiskonditioniereinheit bzw. die Spurkranzschmieranlage in Abhängigkeit des detektierten Schienenbogens anzusteuern, so dass Hilfsmittel bzw. Fluid zielgerichtet und Ressourcen-optimiert auf die Schiene aufgebracht werden.

Durch das erfindungsgemäße Verfahren wird eine optimale Wirkung der Gleiskonditioniereinheit unabhängig von der Trassierung und von Fahrzuständen gewährleistet.

Durch das erfindungsgemäße Verfahren werden Hilfsmedien eingespart bzw. können Einrichtungen zur Erzeugung und Speicherung von Hilfsmedien (Luft, Druckluft, Sand) kleiner dimensioniert und somit Kosten gespart werden.

Durch das erfindungsgemäße Verfahren wird eine optimale Wirkung einer Spurkranzschmieranlage unabhängig von der Trassierung und von Fahrzuständen gewährleistet.

Durch das erfindungsgemäße Verfahren wird (Schmier-) Fluid eingespart, bei Beibehaltung der vollen Funktionalität.

Durch das erfindungsgemäße Verfahren wird die Umwelt geschont.

Durch das erfindungsgemäße Verfahren wird abhängig vom Bogen die Gleiskonditioniereinheit entsprechend eines Querversatzes und der Art des Bogens korrekt angesteuert.

Durch das erfindungsgemäße Verfahren wird die Spurkranzschmieranlage bogensensitiv betrieben. Bei einer Bogenerkennung bzw. bei kleineren Bogenradien wird die Spurkranzschmierung gezielt und mit definierter Dosierung bzw. mit definierten Dosierimpulsen für das Fluid aktiviert.

Nachfolgend wird die vorliegende Erfindung beispielhaft anhand einer Zeichnung näher erläutert.

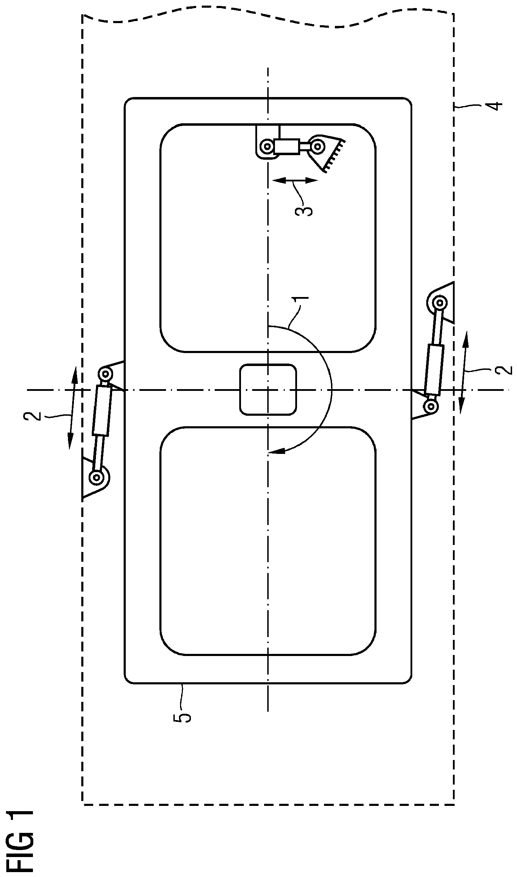

Dabei zeigt FIG 1 das erfindungsgemäße Verfahren, bei dem mit Hilfe einer Wegmessung auf indirekte Weise eine Radstellung eines Schienenfahrzeugs in Querrichtung zur Schiene erfasst wird.

Dabei wird der Effekt ausgenutzt, dass ein das Rad tragendes Fahrwerk 5 relativ zum Wagenkasten 4 in einer Richtung 1 bei einer Bogenfahrt verdreht wird.

Diese Verdrehung wird über eine Wegmessung bestimmt. Beispielsweise ist eine Wegmess-Sensorik WMS vorgesehen, die mit einem Schlingerdämpfer 2 bzw. mit einem Querdämpfer 3 gekoppelt ist.

In einer bevorzugten Weiterbildung ist die Wegmess-Sensorik WMS integrierter Bestandteil des Schlingerdämpfers 2 bzw. des Querdämpfers 3.

Die über Messung ermittelten Dämpferwege werden zur Erkennung eines Querversatzes zwischen Rad und Schiene bzw. zum Erkennen von Bögen im Schienenverlauf verwendet.

Aus der Wegmessung lassen sich insbesondere Aussagen
- bezüglich der Art des Bogens (d.h. liegt ein Rechtsbogen oder ein Linksbogen vor),
- bezüglich des Bogenradius, sowie
- bezüglich eines Querversatzes zwischen Rad und Schiene
ableiten.

Damit ist es möglich, die Gleiskonditioniereinheit entsprechend eines Querversatzes und der Art des Schienenbogens korrekt anzusteuern.

Außerdem ist es möglich, die Spurkranzschmieranlage bogensensitiv zu betreiben, d.h. bei Bogenerkennung oder kleineren Bogenradien die Spurkranzschmierung gezielt und mit definierter Dosierung zu aktivieren.

## Patentansprüche

1. Verfahren zur Ansteuerung einer Gleiskonditioniereinheit bzw. einer Spurkranzschmieranlage eines Schienenfahrzeugs,
- bei dem eine Gleiskonditioniereinheit als Teil des Schienenfahrzeugs bei Bedarf ein Hilfsmittel auf einen Teilbereich einer vom Schienenfahrzeug befahrenen Schiene ausbringt, um Reibung zwischen Rad und Schiene zu erhöhen,
- bei dem eine Spurkranzschmieranlage als Teil des Schienenfahrzeugs bei Bedarf ein Fluid auf einen Radteilbereich des Schienenfahrzeugs oder auf den Schienenteilbereich aufbringt, um Reibung zwischen Rad und Schiene zu reduzieren,
- bei dem eine Relativbewegung zwischen Wagenkasten und Fahrwerk des Schienenfahrzeugs mit Hilfe einer Wegmessung kontinuierlich erfasst wird, um einen Bogen im Schienenverlauf zu detektieren,
- bei dem die Relativbewegung durch eine Wegmessung an Dämpfern bestimmt wird, wobei die Dämpfer zwischen Wagenkasten und Fahrwerk für vorbestimmte Raumrichtungen vorgesehen und angebracht sind, um die Relativbewegung zu dämpfen,
- bei dem basierend auf der Wegmessung die Gleiskonditioniereinheit bzw. die Spurkranzschmieranlage abhängig vom Bogen gezielt angesteuert wird, so dass das Hilfsmittel bzw. Fluid ressourcenschonend aufgebracht wird.

2. Verfahren nach Anspruch 1, bei dem zur Wegmessung eine Sensorik verwendet wird.

3. Verfahren nach Anspruch 2, bei dem die Sensorik die Wegmessung basierend auf einem optischen, induktiven, ultraschallbasierten und/oder kapazitiven Messprinzip durchführt.

## Claims

1. Method for actuating a track conditioning unit or a wheel flange lubricating system of a rail vehicle
- in which, as part of the rail vehicle, a track conditioning unit applies an auxiliary agent as necessary to a sub-region of a rail on which the rail vehicle is traveling, in order to increase friction between the wheel and rail,
- in which, as part of the rail vehicle, a wheel flange lubricating system applies a fluid as necessary to a wheel sub-region of the rail vehicle or to the rail sub-region, in order to reduce friction between the wheel and rail,
- in which a relative movement between the railcar body and the bogie of the rail vehicle is detected continuously with the aid of a displacement measurement in order to detect a bend in the track,
- in which the relative movement is determined by a displacement measurement on dampers, wherein the dampers are provided and fitted between the railcar body and bogie for predetermined spatial directions, in order to damp the relative movement
- in which, on the basis of the displacement measurement, the track conditioning unit or the wheel flange lubricating system is actuated in a targeted manner depending on the bend, so that the auxiliary agent or fluid is applied in a resource-saving manner.

2. Method according to Claim 1, in which sensors are used for the displacement measurement.

3. Method according to Claim 2, in which the sensors carry out the displacement measurement on the basis of an optical, inductive, ultrasound-based and/or capacitive measurement principle.

## Revendications

1. Procédé d'actionnement d'une unité de conditionnement de voie ou d'un système de lubrification de flasque de roue d'un véhicule ferroviaire,
- dans lequel une unité de conditionnement de voie en tant que partie du véhicule ferroviaire fournit, si besoin, un agent auxiliaire sur une zone partielle d'un rail parcouru par le véhicule ferroviaire pour augmenter le frottement entre la roue et le rail,
- dans lequel un système de lubrification de flasque en tant que partie du véhicule ferroviaire applique, si besoin, un fluide sur une zone partielle de roue du véhicule ferroviaire ou sur la zone partielle de rail pour réduire le frottement entre la roue et le rail,
- dans lequel un mouvement relatif entre la caisse de wagon et le train de roulement du véhicule ferroviaire est détecté de façon continue au moyen d'une mesure de déplacement pour détecter une courbure dans le tracé des rails,
- dans lequel le mouvement relatif est déterminé par une mesure de déplacement sur les amortisseurs, les amortisseurs étant prévus et agencés entre la caisse de wagon et le train de roulement pour des sens de direction dans l'espace prédéterminés, afin d'amortir le mouvement relatif,
- dans lequel sur la base de la mesure de déplacement, l'unité de conditionnement de voie ou le système de lubrification de flasque est actionné d'un manière ciblée en fonction de la courbure de sorte que l'agent auxiliaire ou le fluide est appliqué en économisant les ressources.

2. Procédé selon la revendication 1, dans lequel un système de capteurs est utilisé pour mesurer le déplacement.

3. Procédé selon la revendication 2, dans lequel le système de capteurs effectue la mesure de déplacement sur la base d'un principe de mesure optique, inductif, à base d'ultrasons et/ou capacitif.
